# EUROPÄISCHE PATENTSCHRIFT

(11) **EP 2 054 214 B1**
(45) Veröffentlichungstag und Bekanntmachung des Hinweises auf die Patenterteilung: **14.09.2011**
(21) Anmeldenummer: 07764440.9
(22) Anmeldetag: 18.07.2007
(51) Int. Cl.: B29C 49/58, B29C 49/06, B29C 49/36

(54) **VERFAHREN UND VORRICHTUNG ZUR BLASFORMUNG VON BEHÄLTERN**
PROCESS AND APPARATUS FOR THE BLOW MOULDING OF CONTAINERS
PROCÉDÉ ET DISPOSITIF DE FORMATION DE RÉCIPIENTS PAR SOUFFLAGE

(30) Priorität: 25.08.2006 DE 102006039962
(43) Veröffentlichungstag der Anmeldung: 06.05.2009
(73) Patentinhaber: KHS Corpoplast GmbH, 22145 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE); LEWIN, Frank, 22889 Tangstedt (DE); JENZEN, Dieter, 25436 Uetersen (DE)
(74) Vertreter: Klickow, Hans-Henning
(86) Internationale Anmeldenummer: PCT/DE2007/001277
(87) Internationale Veröffentlichungsnummer: WO 2008/022612

(56) Entgegenhaltungen:
- WO-A-96/25285
- DE-A1- 4 117 010
- FR-A- 2 871 721
- US-B1- 6 464 486

## Beschreibung

Die Erfindung betrifft ein Verfahren zur Blasformung von Behältern, bei dem ein Vorformling nach einer thermischen Konditionierung innerhalb einer Blasform durch Blasdruckeinwirkung in den Behälter umgeformt wird sowie bei dem ein Blasgas durch ein Anschlußelement hindurch in einen Innenraum des Vorformlings eingeleitet wird und bei dem ein Anschlußelement zur Abdichtung gegenüber dem vorformling in Richtung einer Vorformlingslängsachse von einem pneumatisch gesteuerten Kolben positioniert wird und bei dem ein Zylinderinnenraum vom Kolben in einen Kopfraum und einen Sockelraum unterteilt wird, sowie bei dem sowohl der Kopfraum als auch der Sockelraum zur Vorgabe eines Betriebszustandes des Kolbens aktiv mindestens zeitweilig von mindestens einem Stellelement derart pneumatisch beaufschlagt werden, daß vorgebbare Kräfte auf den Kolben einwirken.

Die Erfindung betrifft darüber hinaus eine Vorrichtung zur Blasformung von Behältern, die mindestens eine Blasstation mit einer Blasform aufweist, sowie bei der sich ein Strömungsweg für ein Blasgas zur Blasformung der Behälter durch ein Anschlußelement hindurch erstreckt und bei der die Blasstation mit einem in Richtung einer Längsachse positionierbaren Anschlußelement versehen ist, das mit einem in einem Zylinder geführten Kolben gekoppelt ist, der einen Zylinderinnenraum in einen Kopfraum und einen Sockelraum unterteilt und bei der sowohl der Kopfraum als auch der Sockelraum mindestens zeitweise mit mindestens einem pneumatischen Stellelement verbunden sind.

Bei einer Behälterformung durch Blasdruckeinwirkung werden Vorformlinge aus einem thermoplastischen Material, beispielsweise vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformlinge zu Beginn des Blasvorganges.

Der grundsätzliche Aufbau einer Blasstation zur Behälterformung wird in der DB-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die vorformlinge können aber auch mit anderen Trageinrichtungen gehandhabt werden. Die verwendung von Greifzangen zur Handhabung von Vorformlingen und die Verwendung von Spreizdornen, die zur Halterung in einen Mündungsbereich des vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unter-schiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Hehlterformung aufzunehmen, werden typischerweise parallel zueinander angeordnete Platten als Formträger verwendet.

Aus der DE 41 17 010 A1, die ein Verfahren und eine Vorrichtung zur Blasformung von Behältern gemäß dem Oberbegriff der Ansprüche 1 und 10 offenbart, ist es bekannt, den Anschlußkolben einer Blasstation entgegen der Schwerkrafteinwirkung pneumatisch dadurch zu positionieren, daß in den Innenraum eines zylinders Druckluft eingeleitet wird.

Aus der US-B-6464486 ist es bekannt, sowohl eine Vorwärts- als auch eine Rückwärtsbewegung des Anschlußkolbens einer Blasstation pneumatisch zu steuern. Es wird hierzu wahlweise in einen Sockelraum oder einen Kopfraum eines Zylinders Druckluft eingeleitet.

Die gemäß dem Stand der Technik verwendeten pneumatisch gesteuerten Kolben zur Positionierung des Anschlußelementes führen aufgrund ihrer konstruktiven Realisierung zu einem erheblichen verbrauch von Blasluft. Eine Steuerung der Kolben erfolgt typischerweise unter Verwendung der gleichen Hochdruckblasluft, die auch für die Behälterformung verwendet wird. Diese Hochdruckblasluft weist typischerweise einen Druck bis zu 40 bar auf. Typische Totraumvolumina, die im Zusammenhang mit der pneumatischen Ansteuerung der Kolben auftreten, liegen etwa im Bereich von 50 ml. Bei Hochleistungsblasmaschinen erfolgt je Stunde eine 2000-fache ventilbetätigung je Blasstation und Hochleistungsblasmaschinen sind mit bis zu 30 Blasstationen ausgerüstet, so daß lediglich aus den erwähnten Totraumvolumina ein Verbrauch von etwa 3000 1/h an Druckluft mit einem Druck von 40 bar resultiert.

Der insgesamt resultierende Blasluftverbrauch für die Ansteuerung der Kolben führt somit zu deutlichen Betriebskosten, darüber hinaus werden in der Regel auch die investitionskosten erhöht, da ausreichend groß dimensionierte Kompressoren verwendet werden müssen.

Aufgabe der vorliegenden Erfindung ist es daher, ein verfahren der einleitend genannten Art derart zu verbessern, daß der verbrauch von Druckgas verringert wird.

Diese Aufgabe wird erfindungsgemäß dadurch gelöst, daß der Sockelraum und der Kopfraum zur Durchführung eines Druckausgleiches vor einer Durchführung einer Positionierbewegung des Kolbens miteinander verbunden werden.

Weitere Aufgabe der vorliegenden Erfindung ist es, eine Vorrichtung der einleitend genannten Art derart zu konstruieren, daß der Verbrauch an Druckgas vermindert wird.

Diese Aufgabe wird erfindungsgemäß dadurch gelöst, daß der Sockelraum und der Kopfraum vor der Durchführung einer Positionierbewegung des Kolbens vom Stellelement miteinander verbunden sind.

Durch die Möglichkeit zur Ansteuerung sowohl des Kopfraumes als auch des Sockelraumes über das pneumatische Stellelement ist es möglich, aktiv ein Belüften und ein Entlüften des Kopfraumes bzw. des Sockelraumes derart durchzuführen, daß ein einer vorgesehenen Bewegung des Kolbens entgegenstehender Druck vermindert werden kann bzw. ein entsprechendes unter Druck stehendes Gasvolumen zur Positionierung des Kolbens genutzt werden kann. Die erfindungsgemäße Steuerung nutzt aus, daß bei einer pneumatischen Ansteuerung des Kolbens die im Bereich der Blasstation anliegenden Drücke bekannt sind. Diese bekannten Informationen über den jeweiligen Druckzustand können bei der Ansteuerung des Kolbens für das Anschlußelement berücksichtigt werden.

Zur Erzeugung erforderlicher Anpreßkräfte wird vorgeschlagen, daß der Sockelraum zur Vorgabe einer Anpreßkraft mit der Druckgasquelle verbunden wird.

Eine Kompensation der Anpreßkräfte kann dadurch erfolgen, daß der Kopfraum zur Beendigung einer das Anschlußelement abdichtend gegen den Mündungsabschnitt pressenden Kraft mit der Druckgasquelle verbunden wird.

Zur Minimierung eines erforderlichen Druckgasvolumens wird vorgeschlagen, daß der Kopfraum während der Durchführung eines Anpreßvorganges mit einem geringeren Volumen als der Sockelraum versehen wird.

Ebenfalls trägt es zu einer Minimierung des Druckgasvolumens bei, daß der Sockelraum bei einer Rückhubbewegung des Anschlußelementes mit einem abnehmenden Volumen versehen wird.

Der Druckgasverbrauch läßt sich weiterhin dadurch vermindern, daß der Sockelraum und der Kopfraum über das Stellelement bei der Durchführung von Positionierbewegungen des Kolbens miteinander verbunden werden.

Eine gute Steuermöglichkeit wird dadurch bereitgestellt, daß als Stellelement ein 3/2-Wege-Ventil verwendet wird.

Eine weitere Variante zur Verminderung erforderlicher Druckgasmengen für die Durchführung von Positionierbewegungen kann dadurch erreicht werden, daß der Sockelraum und der Kopfraum zur Durchführung eines Druckausgleiches vor einer Durchführung einer Positionierbewegung des Kolbens miteinander verbunden werden.

Ein Druckgasverbrauch zur Durchführung von Positioniervorgängen kann dadurch vermindert werden, daß eine Positionierbewegung des Anschlußelementes kurvengesteuert durchgeführt wird.

Eine einfache Handhabung der Vorformlinge und der geblasenen Behälter wird dadurch unterstützt, daß das Anschlußelement mit seinem Dichtelement in lotrechter Richtung von oben relativ zu den Formhälften positioniert wird.

In den zeichnungen sind Ausführungsbeispiele der Erfindung schematisch dargestellt. Es zeigen:
- Fig. 1: Eine perspektivische Darstellung einer Blas- station zur Herstellung von Behältern aus Vor- formlingen,
- Fig. 2: einen Längsschnitt durch eine Blasform, in der ein Vorformling gereckt und expandiert wird,
- Fig. 3: eine Skizze zur Veranschaulichung eines grund- sätzlichen Aufbaus einer Vorrichtung zur Blas- formung von Behältern,
- Fig. 4: eine modifizierte Heizstrecke mit vergrößerter Heizkapazität und
- Fig. 5: einen schematischen Längsschnitt durch ein An- schlußelement, das von einem pneumatisch ge- steuerten Kolben positionierbar ist und bei der ein den Kolben aufnehmender Zylinderinnen- raum in einen Kopfraum und einen Sockelraum unterteilt ist.

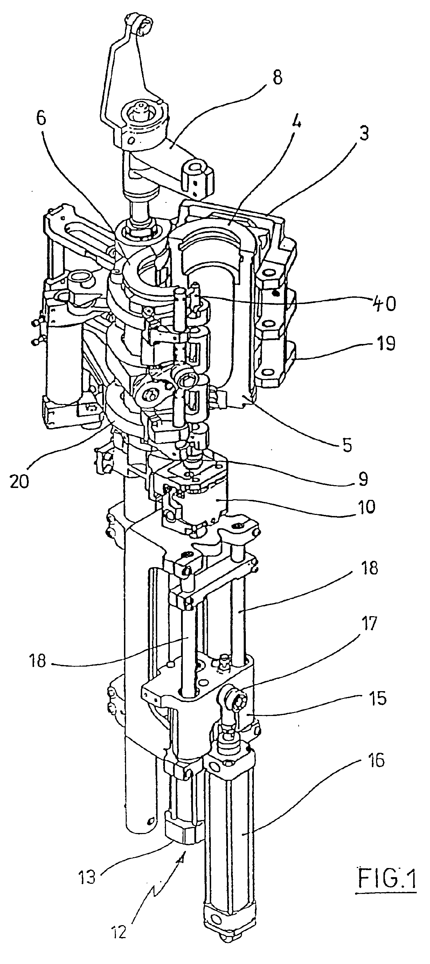

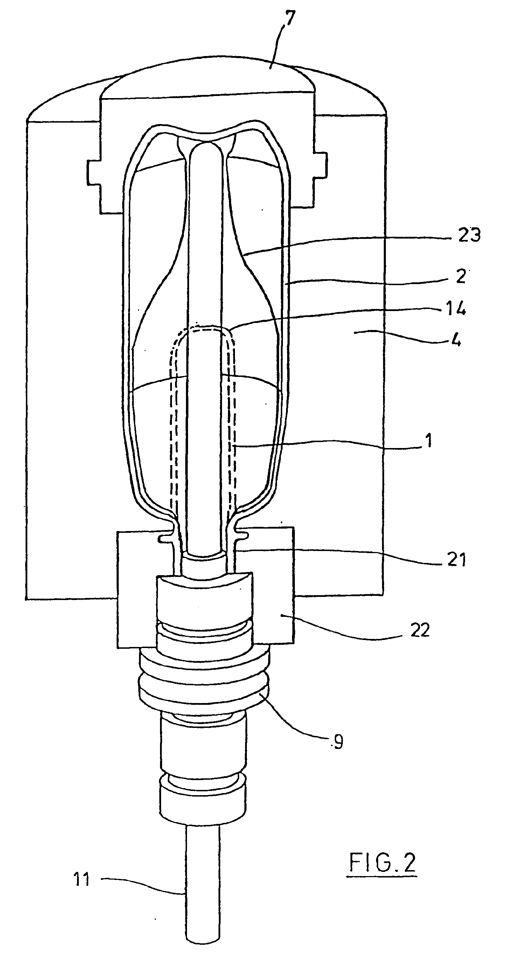

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispiels-weise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

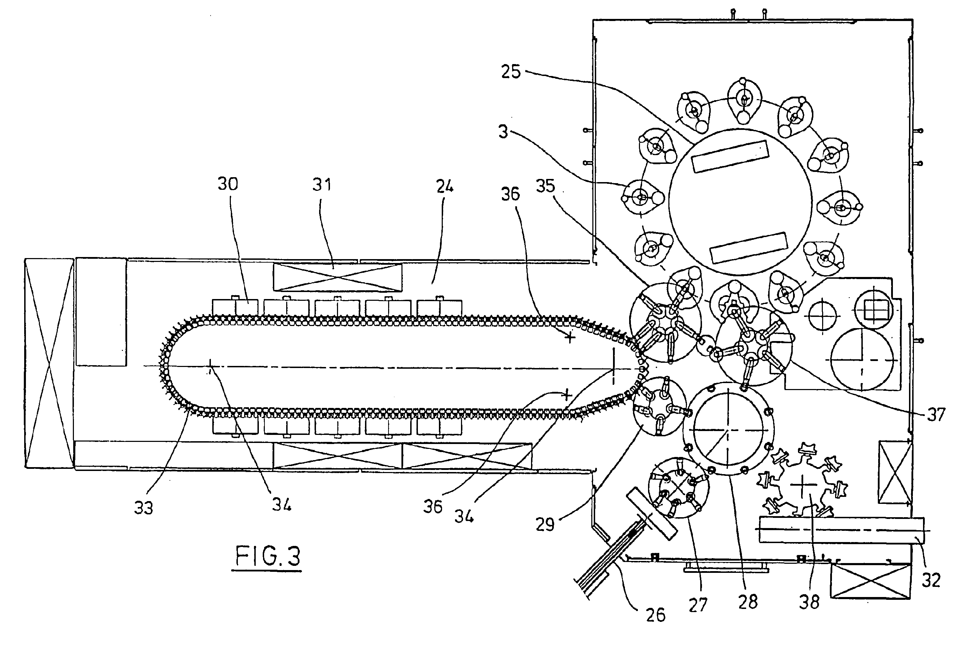

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druck-niveau zugeführt wird und in eine sich anschließende Hauptblasphase unterteilt, in der Gas mit einem höheren Druck-niveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesent-lichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

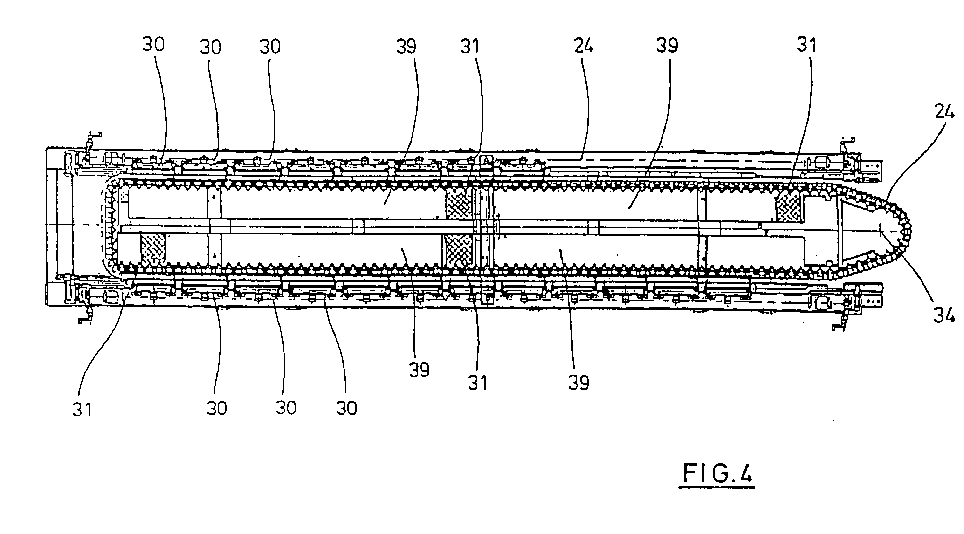

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

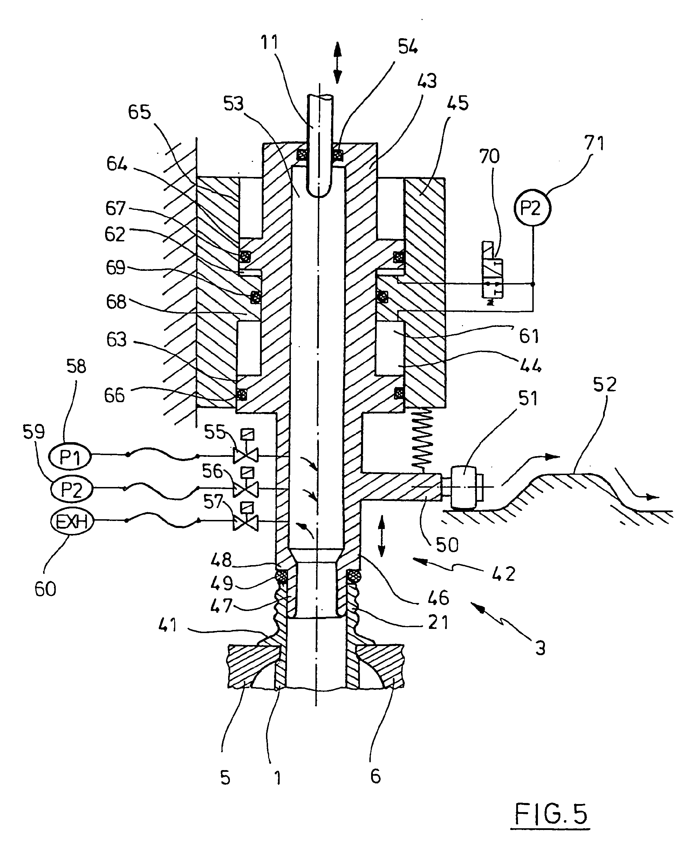

Fig. 5 zeigt eine geschnittene teilweise Darstellung der Blasstation (3). Zu erkennen ist der Vorformling (1), der mit seinem Mündungsabschnitt (21) aus den Formhälften (5, 6) herausragt. Gemäß dem dargestellten Ausführungsbeispiel liegt der Vorformling (1) mit seinem Stützring (41) außenseitig auf den Formhälften (5, 6) auf. Im dargestellten Betriebszustand ist ein Anschlußelement (42), das dem in Fig. 1 dargestellten Anschlußkolben (10) entsprechen kann, abgedichtet gegen den Vorformling (1) gefahren. Das Anschlußelement (42) wird von einem Kolben (43) positioniert, der beweglich innerhalb eines Zylinderinnenraumes (44) eines Zylinders (45) geführt ist. Beim dargestellten Ausführungsbeispiel sind das Anschlußelement (42) und der Kolben (43) einteilig ausgebildet.

Das Anschlußelement (42) besteht im wesentlichen aus einem rohrartigen Hauptkörper (46), der mit einem den Formhälften (5, 6) zugewandt angeordneten Endsegment (47) versehen ist. Das Endsegment (47) ist stutzenartig ausgebildet und weist einen geringeren Außendurchmesser als der Hauptkörper (46) auf. Insbesondere ist daran gedacht, das Endsegment (47) mit einem Durchmesser derart zu versehen, daß das Endsegment (47) in den Mündungsabschnitt (21) des Vorformlings (1) einführbar ist.

Aufgrund der unterschiedlichen Außendurchmesser des Endsegmentes (47) und des Hauptkörpers (46) ist das Endsegment (47) über einen Absatz (48) in den Hauptkörper (46) übergeleitet. Im Bereich des Absatzes (48) ist ein Dichtelement (49), vorzugsweise ein Dichtring, angeordnet. Das Dichtelement (49) wird vom Absatz (48) gegen den Vorformling (1) bzw. den Behälter (2) gedrückt und führt hierdurch die pneumatische Abdichtung durch.

Der Hauptkörper (46) ist über ein Verbindungselement (50) mit einer Kurvenrolle (51) gekoppelt, die entlang einer Kurvenbahn (52) geführt ist. Über die Kurvenbahn (52) ist es möglich, das Anschlußelement (42) derart zu positionieren, daß die erforderlichen Positionierbewegungen ganz oder teilweise mechanisch vorgegeben sind.

Das Anschlußelement (42) ist mit einem Elementinnenraum (53) versehen, in den die Reckstange (11) einführbar ist. Gegenüber dem Kolben (43) ist die Reckstange (11) von einem Dichtelement (54) abgedichtet.

Zur zuleitung und Ableitung von Blasluft ist das Anschlußelement (42) mit Hochdruckventilen (55, 56) und einem Entlüftungsventil (57) gekoppelt. Die Ventile (55, 56, 57) können unmittelbar am Anschlußelement (42) oder mit einem Abstand zum Anschlußelement (42) angeordnet sein. Das Hochdruckventil (55) ist an eine Blasgasversorgung (58) einer ersten Druckstufe und das Hochdruckventil (56) an eine Blasgasversorgung (59) einer zweiten Druckstufe angeschlossen. Das Entlüftungsventil (57) ist mit einer Umgebung (60) verbunden, typischerweise über einen nicht dargestellten Schalldämpfer.

Der Zylinderinnenraum (44) ist in einen Sockelraum (61) und einen Kopfraum (62) unterteilt. Beim dargestellten Ausführungsbeispiel ist der Zylinderinnenraum (44) von Profilen (63, 64) des Kolbens (43) begrenzt, die als ringförmige außenseitige Vorsprünge ausgebildet sind. Gegenüber einer Innenwand (65) des Zylinders (45) sind die Profile (63, 64) über Dichtungen (66, 67) abgedichtet, die beispielsweise als Kolbenringe ausgeführt sein können.

Eine Abgrenzung des Sockelraums (61) vom Kopfraum (62) erfolgt durch ein Profil (68) des Zylinders (45), das als ringförmiger Vorsprung ausgebildet und über eine Dichtung (69) gegenüber dem Kolben (43) abgedichtet ist.

Gemäß einer alternativen Ausführungsform ist es auch möglich, den Sockelraum (61) und den Kopfraum (62) als Vertiefung in der Wandung des Zylinders (45) auszubilden und durch einen außenseitigen Vorsprung am Kolben (43) gegeneinander abzugrenzen.

Der Sockelraum (61) und der Kopfraum (63) sind an mindestens ein Stellelement (70) angeschlossen, das zur Durchführung von pneumatischen Schaltvorgängen ausgebildet ist. Eine Druckgasversorgung erfolgt unter Verwendung einer Druckgasquelle (71). Gemäß einer bevorzugten Ausführungsform ist daran gedacht, als Druckgasquelle (71) die Blasgasversorgung (59) mit dem hohen Blasdruck zu verwenden.

Die in Fig. 5 dargestellte Ausführungsvariante läßt sich beispielsweise gemäß den folgenden Verfahrensschritten einsetzen. Zunächst wird das Anschlußelement (42) kurvengesteuert in Richtung auf den Vorformling (1) verfahren und grenzt mit dem Dichtelement (49) gegen den Mündungsabschnitt (21). Während dieses Verfahrens des Anschlußelementes (42) sind der Sockelraum (61) und der Kopfraum (62) vom Stellelement (70) miteinander verbunden und somit druckausgeglichen. Darüber hinaus kann bei einem gemäß der zeichnerischen Darstellung durchgeführten Absenken des Anschlußelementes (42) Druckgas vom Kopfraum (62) über das Stellelement (70) in den Sockelraum (61) übergeleitet werden.

Nach einem Abschluß des Positioniervorganges des Anschlußelementes (42) wird über das Stellelement (70) der Kopfraum (62) entlüftet und der im Sockelraum (61) anstehende Druck preßt das Anschlußelement (42) mit dem Dichtelement (49) gegen den Mündungsabschnitt (21). Es wird hierdurch eine zuverlässige Abdichtung bereitgestellt. Nach einem Abschluß des Blasvorganges ist es lediglich erforderlich, den im Betriebszustand gemäß Fig. 6 sehr kleinen Kopfraum (62) wieder über das Stellelement (70) an die Druckgasquelle (71) anzuschließen, und anschließend den kurvengesteuerten Verstellvorgang des Anschlußelementes (42) durchzuführen. Auch bei dieser Rückpositionierung des Anschlußelementes (42) kann dann in entgegengesetzter Richtung Druckgas aus dem Sockelraum (61) in den Kopfraum (62) überströmen.

Durch den oben erläuterten Ablauf ist es somit für jeden Prozeßzyklus lediglich erforderlich, einmal den Kopfraum (62) in seiner minimalen Volumenausdehnung mit Druckgas zu füllen. Ein zentraler Aspekt der Erfindung ist in der gesteuerten Verbindung gegeneinander abgegrenzter Bereiche des Zylinderinnenraumes (44) über das Stellelement (70) zu sehen, wobei diese Verbindung ein Überströmen von Druckgas ermöglicht.

Gemäß einer alternativen oder ergänzenden Ausführungsform ist es auch möglich, statt einer kurvengesteuerten Positionierung des Anschlußelementes (42) eine pneumatische Verstellung vorzusehen. Auch bei dieser pneumatischen Verstellung des Anschlußelementes (42) ist es möglich, unter Verwendung eines Stellelementes (70) ein Überströmen zwischen gegeneinander abgegrenzten Bereichen des Zylinderinnenraumes (44) durchzuführen.

Nach einer Druckgasbeaufschlagung des einen Bereiches zur Durchführung einer Positionierbewegung und vor der Durchführung einer Rückpositionierung werden zunächst die beiden Bereiche des Zylinderinnenraumes (44) vom Stellelement (70) miteinander verbunden und es wird ein Druckausgleich vorgenommen. Anschließend wird dann der zuvor vom Druckgas beaufschlagte Raum gegenüber der Umgebung entlüftet und der bereits vorgefüllte zweite Bereich des Zylinderinnenraumes (44) wird mit Druckgas nachgefüllt, um die Positionierbewegung durchzuführen.

Auch durch ein derartiges Verfahren, das alternativ oder ergänzend zu den einleitend bereits erwähnten Prozeßschritten zum Anpressen des Anschlußelementes (42) an den Mündungsabschnitt (21) durchführbar sind, läßt sich die benötigte Menge an Druckgas reduzieren.

## Patentansprüche

1. Verfahren zur Blasformung von Behältern (2), bei dem ein Vorformling (1) nach einer thermischen Konditionierung innerhalb einer Blasform (4) durch Blasdruckeinwirkung in den Behälter (2) umgeformt wird sowie bei dem Blasgas durch ein Anschlußelement (42) hindurch in einen Innenraum des Vorformlings (1) eingeleitet wird und bei dem das Anschlußelement (42) zur Abdichtung gegenüber dem vorformling (1) in Richtung einer Vorformlingslängsachse von einem pneumatisch gesteuerten Kolben (43) beaufschlagt wird und bei dem ein Zylinderinnenraum (44) in einen Kopfraum (62) und einen Sokkelraum (61) unterteilt wird, sowie bei dem sowohl der Kopfraum (62) als auch der Sockelraum (61) zur Vorgabe eines Betriebszustandes des Kolbens (43) aktiv mindestens zeitweilig von mindestens einem Stellelement (70) derart pneumatisch beaufschlagt werden, daß vorgebbare Kräfte auf den Kolben (43) einwirken, **dadurch gekennzeichnet, daß** der Sockelraum (61) und der Kopfraum (62) zur Durchführung eines Druckausgleiches vor einer Durchführung einer Positionierbewegung des Kolbens (43) miteinander verbunden werden.

2. Verfahren nach Anspruch 1, **dadurch gekennzeichnet, daß** der Sockelraum (61) zur Vorgabe einer Anpreßkraft mit der Druckgasquelle (71) verbunden wird.

3. verfahren nach Anspruch 1 oder 2, **dadurch gekennzeichnet, daß** der Kopfraum (62) zur Beendigung einer das Anschlußelement (42) abdichtend gegen den Mündungsabschnitt (21) pressenden Kraft mit der Druckgasquelle (71) verbunden wird.

4. Verfahren nach einem der Ansprüche 1 bis 3, **dadurch gekennzeichnet, daß** der Kopfraum (62) während der Durchführung eines Anpreßvorgangs mit einem geringeren Volumen als der Sockelraum (61) versehen wird.

5. Verfahren nach einem der Ansprüche 1 bis 4, **dadurch gekennzeichnet, daß** der Sockelraum (61) bei einer Rückhubbewegung des Anschlußelementes (42) mit einem abnehmenden Volumen versehen wird.

6. Verfahren nach einem der Ansprüche 1 bis 5, **dadurch gekennzeichnet, daß** der Sockelraum (61) und der Kopfraum (62) über das Stellelement (70) bei der Durchführung von Positionierbewegungen des Kolbens (43) miteinander verbunden werden.

7. verfahren nach einem der Ansprüche 1 bis 6, **dadurch gekennzeichnet, daß** als Stellelement (70) ein 3/2-Wege-Ventil verwendet wird.

8. Verfahren nach einem der Ansprüche 1 bis 7, **dadurch gekennzeichnet, daß** eine Positionierbewegung des Anschlußelementes (42) kurvengesteuert durchgeführt wird.

9. Verfahren nach einem der Ansprüche 1 bis 8, **dadurch gekennzeichnet, daß** das Anschlußelement (42) mit seinem Dichtelement (49) in lotrechter Richtung von oben relativ zu den Formhälften (5, 6) positioniert wird.

10. Vorrichtung zur Blasformung von Behältern (2), die mindestens eine Blasstation (3) mit einer Blasform (4) aufweist, sowie bei der sich ein Strömungsweg für ein Blasgas zur Blasformung der Behälter (2) durch ein Anschlußelement (42) hindurch erstreckt und bei der die Blasstation (3) mit dem in Richtung einer Längsachse positionierbaren Anschlußelement (42) versehen ist, das mit einem in einem Zylinder (45) geführten Kolben (43) gekoppelt ist, der mindestens bereichsweise von einem zylinderinnenraum (44) aufgenommen ist, der in einen Kopfraum (62) und einen Sockelraum (61) unterteilt ist, und bei der sowohl der Kopfraum (62) als auch der Sockelraum (61) mindestens zeitweise mit mindestens einem pneumatischen Stellelement (70) verbundbar sind, **dadurch gekennzeichnet, daß** der Sockelraum (61) und der Kopfraum (62) vor der Durchführung einer Positionierbewegung des Kolbens (43) vom Stellelement (70) miteinander verbundbar sind.

11. Vorrichtung nach Anspruch 10, **dadurch gekennzeichnet, daß** der Sockelraum (61) in einem abdichtenden Betriebszustand mit der Druckgaswelle (71) verbunden ist.

12. Vorrichtung nach Anspruch 10 oder 11, **dadurch gekennzeichnet, daß** der Kopfraum (62) in einem Ruhezustand des Anschlußelementes (42) mit der Druckgasquelle (71) verbunden ist.

13. Vorrichtung nach einem der Ansprüche 10 bis 12, **dadurch gekennzeichnet, daß** der Kopfraum (62) in einem abgedichteten zustand ein geringeres Volumen als der Sockelraum (61) aufweist.

14. Vorrichtung nach einem der Ansprüche 10 bis 13, **dadurch gekennzeichnet, daß** der Sockelraum (61) in einem Ruhezustand des Anschlußelementes (42) ein geringeres Volumen als in einem abgedichteten Zustand aufweist.

15. Vorrichtung nach einem der Ansprüche 10 bis 14, **dadurch gekennzeichnet, daß** das Stellelement (70) in mindestens einem Betriebszustand zur Verbindung des Sockelraumes (61) und des Kopfraumes (62) ausgebildet ist.

16. Vorrichtung nach einem der Ansprüche 10 bis 15, **dadurch gekennzeichnet, daß** das Stellelement (70) als ein 3/2-wege-Ventil ausgebildet ist.

17. Vorrichtung nach einem der Ansprüche 10 bis 16, **dadurch gekennzeichnet, daß** das Anschlußelement (42) mit einer Kurvensteuerung gekoppelt ist.

18. Vorrichtung nach einem der Ansprüche 10 bis 17, **dadurch gekennzeichnet, daß** das Anschlußelement (42) in lotrechter Richtung oberhalb der Formhälften (5, 6) angeordnet ist.

## Claims

1. A process for blow moulding containers (2), in which a preform (1) is shaped into the container (2) under the action of blowing pressure after thermal conditioning within a blowing mould (4), and in which blowing gas is introduced through a connection element (42) into an interior space of the preform (1) and in which the connection element (42) is acted upon in the direction of a preform longitudinal axis by a pneumatically controlled piston (43) for sealing with respect to the preform (1) and in which a cylinder interior space (44) is divided into a head space (62) and a base space (61) and in which, to specify an operating state of the piston (43), both the head space (62) and the base space (61) are at least temporarily actively acted upon pneumatically by at least one control element (70) in such a way that specifiable forces act on the piston (43), **characterised in that** the base space (61) and the head space (62) are connected to one another to effect a pressure compensation before a positioning movement of the piston (43) is carried out.

2. A process according to Claim 1, **characterised in that** the base space (61) is connected to the compressed gas source (71) to specify a pressure force.

3. A process according to Claim 1 or 2, **characterised in that** the head space (62) is connected to the compressed gas source (71) to terminate a force pressing the connection element (42) in sealing manner against the mouth portion (21).

4. A process according to one of Claims 1 to 3, **characterised in that** the head space (62) is provided with a smaller volume than the base space (61) whilst a pressing procedure is carried out.

5. A process according to one of Claims 1 to 4, **characterised in that** the base space (61) is provided with a decreasing volume during a return stroke movement of the connection element (42).

6. A process according to one of Claims 1 to 5, **characterised in that** the base space (61) and the head space (62) are connected to one another by way of the control element (70) whilst positioning movements of the piston (43) are carried out.

7. A process according to one of Claims 1 to 6, **characterised in that** a 3/2-way valve is used as the control element (70).

8. A process according to one of Claims 1 to 7, **characterised in that** a positioning movement of the connection element (42) is carried out in a cam-controlled manner.

9. A process according to one of Claims 1 to 8, **characterised in that** the connection element (42) is positioned with its sealing element (49) in a vertical direction above the mould halves (5, 6).

10. An apparatus for blow moulding containers (2) which has at least one blowing station (3) with a blowing mould (4) and in which a flow path for a blowing gas for blow moulding the containers (2) extends through a connection element (42) and in which the blowing station (3) is provided with the connection element (42), which may be positioned in the direction of a longitudinal axis and is coupled to a piston (43) which is guided in a cylinder (45) and is received at least in parts by a cylinder interior space (44) which is divided into a head space (62) and a base space (61), and in which both the head space (62) and the base space (61) are connected at least temporarily to at least one pneumatic control element (70), **characterised in that** the base space (61) and the head space (62) are connected to one another by the control element (70) before a positioning movement of the piston (43) is carried out.

11. An apparatus according to Claim 10, **characterised in that** the base space (61) is connected to the compressed gas shaft (71) in a sealing operating state.

12. An apparatus according to Claim 10 or 11, **characterised in that** the head space (62) is connected to the compressed gas source (71) in an idle state of the connection element (42).

13. An apparatus according to one of Claims 10 to 12, **characterised in that** the head space (62) has a smaller volume than the base space (61) in a sealed state.

14. An apparatus according to one of Claims 10 to 13, **characterised in that** the base space (61) has a smaller volume in an idle state of the connection element (42) than in a sealed state.

15. An apparatus according to one of Claims 10 to 14, **characterised in that** the control element (70) is constructed to connect the base space (61) and the head space (62) in at least one operating state.

16. An apparatus according to one of Claims 10 to 15, **characterised in that** the control element (70) is constructed as a 3/2 way valve.

17. An apparatus according to one of Claims 10 to 16, **characterised in that** the connection element (42) is coupled to a cam control.

18. An apparatus according to one of Claims 10 to 17, **characterised in that** the connection element (42) is arranged in a vertical direction above the mould halves (5, 6).

## Revendications

1. Procédé pour le formage par soufflage de récipients (2), dans lequel une préforme (1), après un conditionnement thermique, à l'intérieur d'un moule (4), est transformée en un récipient (2) sous l'effet de la pression de soufflage, ainsi que dans lequel du gaz de soufflage est introduit dans un espace intérieur de la préforme (1), à travers un élément de raccordement (42), et dans lequel, pour assurer l'étanchéité par rapport à la préforme (1), l'élément de raccordement (42) est soumis à l'action d'un piston (43) à commande pneumatique, dans la direction d'un axe longitudinal de la préforme (1), et dans lequel un espace intérieur du cylindre (44) est divisé en une chambre de tête (62) et une chambre de socle (61), ainsi que dans lequel aussi bien la chambre de tête (62) que la chambre de socle (61) sont, au moins temporairement, activement soumises à l'action d'au moins un élément de réglage (70), pour la prédétermination d'un état de fonctionnement du piston (43), de sorte que des forces, qui peuvent être prédéterminées, agissent sur le piston (43), **caractérisé en ce que** la chambre de socle (61) et la chambre de tête (62) sont reliées ensemble pour la réalisation d'une compensation de pression, avant une exécution d'un mouvement de positionnement du piston (43).

2. Procédé selon la revendication 1, **caractérisé en ce que** la chambre de socle (61) est reliée avec la source de gaz sous pression (71) pour la prédétermination d'une force de pression.

3. Procédé selon revendication 1 ou 2, **caractérisé en ce que** la chambre de tête (62) est reliée à la source de gaz sous pression (71) pour mettre fin à une force de pression, qui, assurant l'étanchéité de l'élément de raccordement (42), est exercée contre la section de débouché (21).

4. Procédé selon l'une des revendications 1 ou 3, **caractérisé en ce que**, pendant l'exécution d'un processus de pression, la chambre de tête (62) présente un volume plus faible que la chambre de socle (61).

5. Procédé selon l'une des revendications 1 à 4, **caractérisé en ce que** la chambre de socle (61) présente un volume décroissant, lors d'un mouvement rétrograde de l'élément de raccordement (42).

6. Procédé selon l'une des revendications 1 à 5, **caractérisé en ce que** la chambre de socle (61) et la chambre de tête (62) sont reliées ensemble, par l'intermédiaire de élément de réglage (70), lors de l'exécution de mouvements de positionnement du piston (43).

7. Procédé selon l'une des revendications 1 à 6, **caractérisé en ce que** l'on utilise, en tant qu'élément de réglage (70), une soupape à 3/2 voies.

8. Procédé selon l'une des revendications 1 à 7, **caractérisé en ce qu'**un mouvement de positionnement de l'élément de raccordement (42) est exécuté par commande à came.

9. Procédé selon l'une des revendications 1 à 8, **caractérisé en ce que** l'élément de raccordement (42) est positionné, avec son élément d'étanchéité (49), perpendiculairement, d'en haut, par rapport aux demi-moules (5, 6).

10. Dispositif pour le formage par soufflage de récipients (2), qui comprend au moins une station de soufflage (3), avec un moule (4), ainsi que dans lequel s'étend, à travers un élément de raccordement (42), une voie d'écoulement pour un gaz de soufflage, destiné au formage par soufflage des récipients (2), et dans lequel la station de soufflage (3) est pourvue de l'élément de raccordement (42), qui, pouvant être positionné dans la direction d'un axe longitudinal, est couplé avec un piston (43), qui, guidé dans un cylindre (45), qui est accueilli, au moins par sections, dans un espace intérieur (44) du cylindre, qui est divisé en une chambre de tête (62) et une chambre de socle (61), et dans lequel aussi bien la chambre de tête (62) que la chambre de socle (61) sont, au moins temporairement, raccordées à au moins un élément de réglage pneumatique (70), **caractérisé en ce que** la chambre de socle (61) et la chambre de tête (62) sont reliées ensemble par l'élément de réglage (70), avant l'exécution d'un mouvement de positionnement du piston (43).

11. Dispositif selon la revendication 10, **caractérisé en ce que** la chambre de socle (61), dans un état de fonctionnement étanche, est reliée avec la source de gaz sous pression (71).

12. Dispositif selon revendication 10 ou 11, **caractérisé en ce que** la chambre de tête (62), dans un état de repos de l'élément de raccordement (42), est reliée à la source de gaz sous pression (71).

13. Dispositif selon l'une des revendications 10 à 12, **caractérisé en ce que** la chambre de tête (62), dans un état étanche, présente un volume plus faible que la chambre de socle (61).

14. Dispositif selon l'une des revendications 10 à 13, **caractérisé en ce que** la chambre de socle (61), dans un état de repos de l'élément de raccordement (42), présente un volume plus faible que dans un état étanche.

15. Dispositif selon l'une des revendications 10 à 14, **caractérisé en ce que** l'élément de réglage (70) est conçu pour relier la chambre de socle (61) et la chambre de tête (62), dans au moins un état de fonctionnement.

16. Dispositif selon l'une des revendications 10 à 15, **caractérisé en ce que** l'élément de réglage (70) est réalisé sous la forme d'une soupape à 3/2 voies.

17. Dispositif selon l'une des revendications 10 à 16, **caractérisé en ce que** l'élément de raccordement (42) est couplé avec une commande à came.

18. Dispositif selon l'une des revendications 10 à 17, **caractérisé en ce que** l'élément de raccordement (42) est disposé perpendiculairement au-dessus des demi-moules (5, 6).
